# EUROPEAN PATENT SPECIFICATION

(11) **EP 2 633 472 B1**
(45) Date of publication and mention of the grant of the patent: **13.05.2015**
(21) Application number: 11769990.0
(22) Date of filing: 27.09.2011
(51) Int. Cl.: G06K 7/10

(54) **ADVISORY ALARM FOR RETURNING CORDLESS ELECTRO-OPTICAL READER TO BASE STATION OF POINT-OF-TRANSACTION CHECKOUT SYSTEM**
HINWEISALARM ZUM RETOURNIEREN EINER SCHNURLOSEN ELEKTROOPTISCHEN LESEVORRICHTUNG ZUR BASISSTATION EINES ABFERTIGUNGSSYSTEMS AN EINEM TRANSAKTIONSORT
ALARME D'AVERTISSEMENT D'UNE REMISE EN PLACE D'UN LECTEUR ÉLECTRO-OPTIQUE SANS FIL DANS UNE STATION DE BASE D'UN SYSTÈME DE CONTRÔLE DE POINT DE TRANSACTION

(30) Priority: 25.10.2010 US 911196
(43) Date of publication of application: 04.09.2013
(73) Proprietor: Symbol Technologies, Inc., Holtsville, NY 11742 (US)
(72) Inventor: BROCK, Christopher Warren, Manorville, NY 11949 (US)
(74) Representative: Schäflein, Christian Georg
(86) International application number: PCT/US2011/053346
(87) International publication number: WO 2012/060943

(56) References cited:
- EP-A2- 1 569 157
- US-A- 4 550 247
- US-A1- 2005 127 866
- US-A1- 2007 246 540
- US-A1- 2009 102 671
- US-B2- 7 165 015

## Description

### BACKGROUND OF THE INVENTION

In the retail industry, flat bed, laser-based readers, also known as horizontal slot scanners, have been used to electro-optically read one-dimensional bar code symbols, particularly of the Universal Product Code (UPC) type, at point-of transaction checkout systems in supermarkets, warehouse clubs, department stores, and other kinds of retailers for many years. A single, horizontal window is set flush with, and built into, a horizontal countertop of the system. Products to be purchased bear identifying symbols and are typically slid by a clerk or operator across the horizontal window through which a multitude of scan lines is projected in a generally upwards direction. When at least one of the scan lines sweeps over a symbol associated with a product, the symbol is processed and read. The multitude of scan lines is typically generated by a scan pattern generator which includes a laser for emitting a laser beam at a mirrored component mounted on a shaft for rotation by a motor about an axis. A plurality of stationary mirrors is arranged about the axis. As the mirrored component turns, the laser beam is successively reflected onto the stationary mirrors for reflection therefrom through the horizontal window as a scan pattern of the scan lines.

It is also known to provide the checkout system not only with a generally horizontal window, but also with an upright or generally vertical window that faces the clerk at the system. The upright window is oriented generally perpendicularly to the horizontal window, or is slightly rearwardly or forwardly inclined. The laser scan pattern generator within this dual window or bi-optical terminal or workstation also projects the multitude of scan lines in a generally outward direction through the upright window toward the clerk. The generator for the upright window can be the same as, or different from, the generator for the horizontal window. The clerk slides the products past either window, e.g., from right to left, or from left to right, or diagonally, in a "swipe" mode. Alternatively, the clerk merely presents the symbol on the product to a central region of either window in a "presentation" mode. The choice depends on clerk preference or on the layout of the system.

As advantageous as these laser-based, point-of-transaction systems have been in processing transactions involving products associated with one-dimensional symbols, these systems cannot process stacked symbols, such as Code 49 that introduced the concept of vertically stacking a plurality of rows of bar and space patterns in a single symbol, or two-dimensional symbols, such as PDF417 that increased the amount of data that could be represented or stored on a given amount of surface area. Both one- and two-dimensional symbols, as well as stacked symbols, can be read by employing imaging readers each having a solid-state imager which has a one- or two-dimensional array of cells or photosensors that correspond to image elements or pixels in a field of view of the imager. Such an imager may include a one-or two-dimensional charge coupled device (CCD) or a complementary metal oxide semiconductor (CMOS) device, as well as associated circuits for producing electronic signals corresponding to the one- or two-dimensional array of pixel information over the field of view.

It is also known to install the solid-state imager, analogous to that conventionally used in a consumer digital camera, in a bi-optical, point-of-transaction workstation, in which both the solid-state imager and the laser scan pattern generator are used in the same workstation. It is further known to replace all of the laser scan pattern generators with solid-state imagers in order to improve reliability and to enable the reading of two-dimensional and stacked symbols, as well as the imaging of other targets, such as signatures, driver's licenses, receipts, etc.

As advantageous as the known laser- and/or imager-based, bi-optical workstations have been in processing products, the workstations are often accompanied by auxiliary electro-optical readers, either laser-based or imager-based, operated in a handheld mode to facilitate reading of large, heavy or bulky items that cannot be readily lifted into position facing at least one of the windows of a respective workstation. In general, a corded reader is used, and its cord or cable is plugged directly into an auxiliary reader port on the workstation. However, the corded reader's cable typically gets in the way of the handling of the products to be processed at the workstation, and the cable must often be repeatedly pushed out of the way after each time the corded reader is used. In addition, should the corded reader or its cable become damaged, the workstation must be removed from the countertop to enable unplugging of the corded reader for repair or replacement.

To alleviate part of this problem caused by the presence of the cable, a cordless reader can be operated in a handheld mode. The cordless reader is typically supported in a hands-free mode by a base station mounted on the countertop or on the workstation itself. When in the base station, the cordless reader's on-board batteries are electrically recharged by an external power supply connected to the base station. The base station also may contain a wireless transceiver with which an on-board wireless transceiver in the cordless reader communicates when a symbol on a product is read, as well as interface circuitry compatible with the auxiliary reader port on the workstation.

Although this cordless arrangement avoids the problem with the reader's cable being in the way and possibly becoming damaged, the absence of the cable makes the cordless reader prone to being misplaced and stolen. Frequently, the clerk will not return the cordless reader to its base station after an item has been read and will absent-mindedly put the cordless reader down somewhere else. The clerk may forget where the cordless reader was last placed, or sometimes the misplaced cordless reader is inadvertently or deliberately removed from the checkout system.

Accordingly, a solution is needed that eliminates the inconvenience and minimizes the risk of loss of a cordless reader, and that encourages the clerk to return the cordless reader to the base station. An additional problem that requires a solution is that the battery in the cordless reader can be discharged during a work shift if the clerk neglects to replace the cordless reader back in its base station. A means of assuring that the cordless reader is always returned to its base station when not in use is thus needed. Claims 1 and 8 are delimited against EP-A-1 569 157.

### SUMMARY OF THE INVENTION

The invention is set out in claims 1 and 8. This invention generally relates to a checkout system for, and a method of, processing products bearing indicia, typically one- or two-dimensional bar code symbols. The indicia can be printed on the products, or can be displayed on screens of such products as cellular telephones. The system includes a base station supported by a support surface, such as a countertop of a checkout stand, and having a compartment in which a cordless reader is removably mounted.

The base station may be a simple docking station without any windows or readers, or, preferably, is a bi-optical workstation having dual windows, typically a generally horizontal window and a generally upright window. The workstation includes a generally upright or raised housing extending upwardly away from the countertop, and a main reader supported by the workstation for electro-optically reading the indicia through at least one of the windows. The main reader can be laser- and/or imager-based, as described above.

The main reader advantageously includes a plurality of imaging readers that operate by image capture, each imaging reader including a solid-state imager for capturing return light from the indicia through at least one of the windows. Each imager preferably comprises a one-or two-dimensional, charge coupled device (CCD) array or a complementary metal oxide semiconductor (CMOS) array. Each imager preferably includes an illuminator for illuminating the indicia with illumination light from one or more illumination light sources, e.g., one or more light emitting diodes (LEDs). A controller, e.g., a microprocessor, in the workstation is operative for controlling each illuminator to illuminate the indicia, for controlling each imager to capture the illumination light returning from the indicia over an exposure time period to produce electrical signals indicative of the indicia being read, and for processing the electrical signals to decode and read the indicia. Each illuminator is preferably operative during the exposure time period. Each imager is controlled to capture the light from the indicia during different exposure time periods to avoid mutual interference among the illuminators.

The cordless reader is an auxiliary reader that is operative for electro-optically reading the indicia in a handheld mode when the main reader is not operated to read the indicia. As described above, the auxiliary cordless reader is employed to facilitate reading of large, heavy or bulky items that cannot be readily lifted into position facing at least one of the windows of the workstation. The auxiliary cordless reader can be laser-based or imager-based. When the auxiliary cordless reader is mounted in the compartment of the base station, the cordless reader is in a hands-free mode.

A transceiver, preferably a radio frequency (RF) wireless transceiver is supported by each of the cordless reader and the base station and is operative for communicating data between the cordless reader and the base station. For example, control data can be sent and uploaded from the base station to the cordless reader, and data corresponding to the indicia being read can be sent and downloaded, either in batch or serial format, from the cordless reader to the base station. A controller is supported by the cordless reader and/or the base station and is operative for controlling operation of the cordless reader and the base station, and for determining whether the cordless reader is in the handheld or the hands-free mode. The cordless reader includes a sensor contact for connection to a mating sensor contact in the base station when the cordless reader is received in the compartment. The controller in the base station detects the cordless reader in the base station via the sensor contacts.

One feature of this invention resides, briefly stated, in an alarm supported by the cordless reader and/or the base station. The alarm is operative for generating an advisory alert. The alarm is advantageously a lamp for generating the advisory alert as a light, and/or a beeper for generating the advisory alert as a sound. The advisory alert advises the clerk, for example, to return the cordless reader to the compartment when the controller determines that the cordless reader is in the handheld mode and at least one of the cordless reader and the base station does not satisfy an operational condition. For example, the controller is operative to cause the advisory alert to be generated when the controller in the base station determines that no data is received by the transceiver in the base station after a time-out period has elapsed. As another example, the controller is operative to cause the advisory alert to be generated when the controller in the base station is disabled. As a further example, the controller is operative cause the advisory alert to be generated when the controller in the base station determines that the data communication between the cordless reader and the base station has been interrupted.

The alarm encourages the clerk or operator to return the cordless reader to the base station when the cordless reader is not in active use. This eliminates the inconvenience and expense, and minimizes the risk, of loss or misplacement of the cordless reader.

In accordance with another feature of this invention, the checkout method is performed by electro-optically reading indicia on products to be processed with a cordless reader in a handheld mode, removably mounting the cordless reader in a compartment of a base station in a hands-free mode, communicating data between the cordless reader and the base station with a transceiver supported by each of the cordless reader and the base station, controlling operation of the cordless reader and the base station, determining the mode of the cordless reader with a controller supported by at least one of the cordless reader and the base station, and generating an advisory alert with an alarm supported by at least one of the cordless reader and the base station to advise a return of the cordless reader to the compartment when the controller determines that the cordless reader is in the handheld mode and at least one of the cordless reader and the base station does not satisfy an operational condition.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

FIG. 1 is a perspective view of a base station configured as a bi-optical, dual window, point-of-transaction workstation with an alarm in accordance with one embodiment of this invention, as well as an auxiliary cordless reader for docking with the workstation;
FIG. 2 is a part-sectional, part-diagrammatic, schematic view of the bi-optical workstation of FIG. 1;
FIG. 3 is a part-sectional, part-diagrammatic, schematic view of a laser-based auxiliary cordless reader for use in the embodiment of FIG. 1;
FIG. 4 is a part-sectional, part-diagrammatic, schematic view of an imager-based auxiliary cordless reader for use in the embodiment of FIG. 1; and
FIG. 5 is a part-sectional, part-diagrammatic, schematic view of a differently configured cordless reader docked in a differently configured base station, together with an alarm in accordance with another embodiment of this invention.

### DETAILED DESCRIPTION OF THE PREFERRED EMBODIMENTS

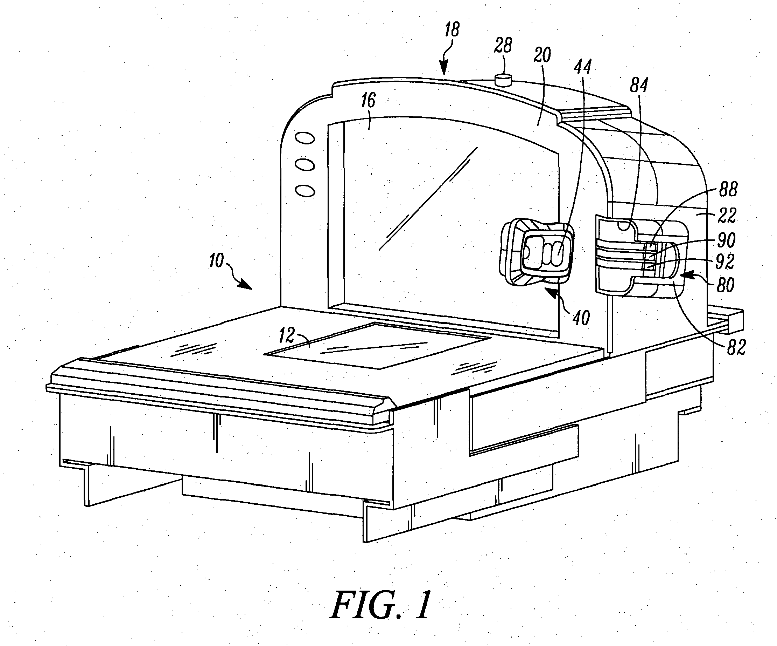

FIGs. 1-2 depict a dual window, bi-optical, point-of-transaction workstation 10 used by retailers at a checkout stand to process transactions involving the purchase of products bearing identifying indicia or targets, such as the UPC symbols described above. The indicia can be printed on the products, or can be displayed on screens of such products as cellular telephones. Workstation 10 has a generally horizontal window 12 elevated, or set flush with, a generally horizontal support surface, such as a countertop 14 of the checkout stand, and a vertical or generally vertical, i.e., slightly rearwardly or forwardly tilted (referred to as "upright" hereinafter) window 16 set flush with, or recessed into, a generally upright or raised housing portion 18 above the countertop 14. Workstation 10 either rests directly on the countertop 14 as illustrated, or rests in a well formed in the countertop 14, or may be mounted on a movable support structure, such as a turntable, for rotation in either circumferential direction about a vertical axis perpendicular to the countertop 14. Raised housing portion 18 has a front wall 20 peripherally surrounding the upright window 16, and a pair of side walls 22, 22 at opposite lateral sides of the workstation 10.

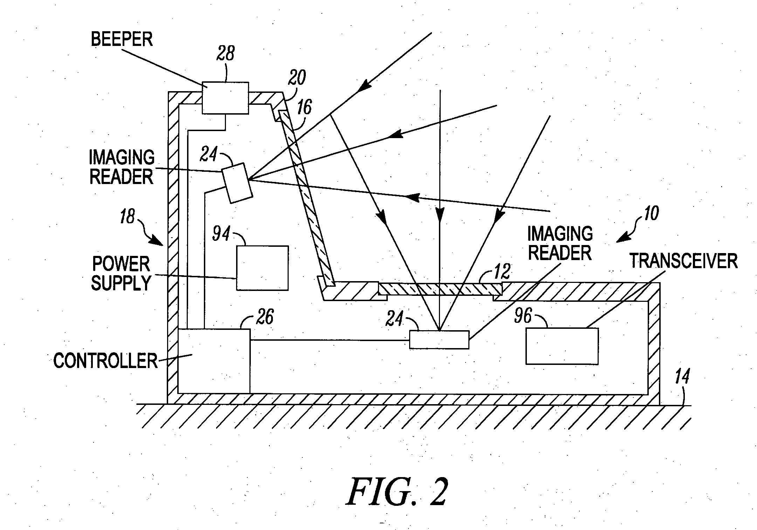

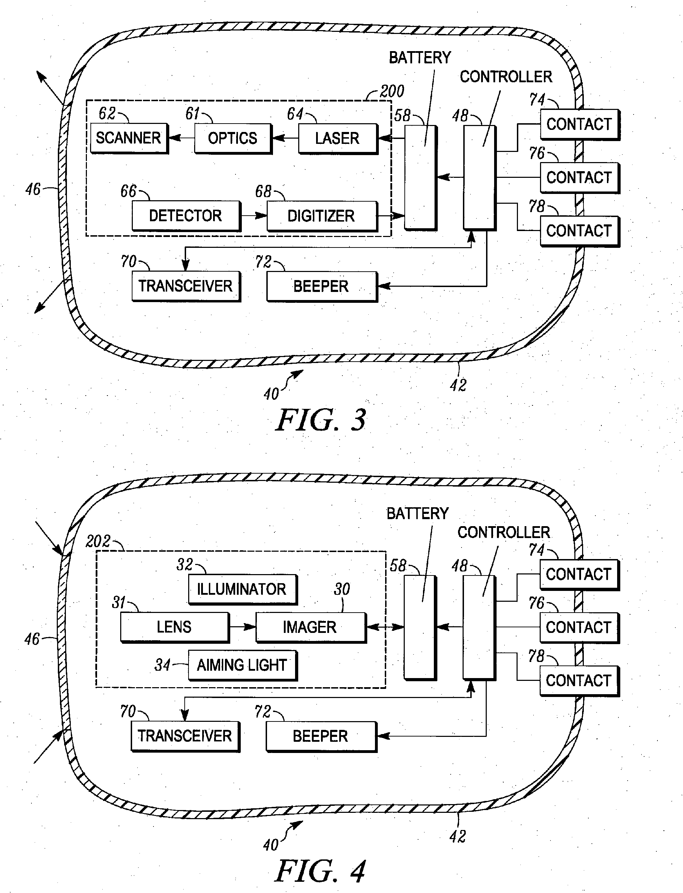

A main electro-optical reader is supported by the workstation 10 and is operative for electro-optically reading the indicia through at least one of the windows 12, 16. The main reader can be laser- and/or imager-based, as described above. An example of a laser-based reader is described below in connection with FIG. 3. An example of an imager-based reader is described below in connection with FIG. 4. As schematically shown in FIG. 2, the main reader in the workstation 10 advantageously includes a plurality of imaging readers 24, 24, one for each window 12, 16, for capturing light passing through either or both windows 12, 16 over intersecting fields of view from a target that can be a one- or two-dimensional symbol, such as a two-dimensional symbol on a driver's license, or any document. The imaging readers 24, 24 are operatively connected to a programmed microprocessor or controller 26 operative for controlling their operation. Preferably, the controller 26 is the same as the one used for decoding the return light scattered from the target and for processing the captured target images. An alarm 28, as described below, is mounted on the workstation, for example, on top of the raised housing portion 18.

In use, a clerk or a customer processes a product bearing a UPC symbol thereon past the windows 12, 16 by swiping the product across a respective window 12, 16, or by presenting the product by holding it momentarily steady at the respective window 12, 16. The symbol may be located on any of the top, bottom, right, left, front and rear, sides of the product, and at least one, if not more, of the imaging readers 24, 24 will capture the return light reflected, scattered, or otherwise returning from the symbol through one or both windows 12, 16.

As also shown in FIG. 1, the workstation 10 is accompanied by an auxiliary cordless electro-optical reader 40, either laser-based (FIG. 3) or imager-based (FIG. 4), to facilitate reading in a handheld mode of large, heavy or bulky products that cannot be readily lifted into position facing at least one of the windows 12, 16. As described below, the cordless reader 40 is typically supported in a hands-free mode by a cradle or dock 80 when not in active reading use. As illustrated, the cradle 80 is mounted on the workstation 10, but the cradle could also be a convenience stand resting on the countertop 14 away from the workstation 10.

FIG. 3 depicts a laser-based, auxiliary cordless reader 40 for electro-optically reading symbols, and includes a scanner 62 in a handheld housing 42 having a trigger 44 (see FIG. 1) for initiating reading. The scanner 62 is operative for scanning an outgoing laser beam from a laser 64 and/or a field of view of a light detector or photodiode 66 in a scan pattern, typically comprised of one or more scan lines, multiple times per second, for example, forty times per second, through a window 46 across the symbol for reflection or scattering therefrom as return light detected by the photodiode 66 during reading. The reader 40 also includes a focusing lens assembly or optics 61 for optically codifying the outgoing laser beam to have a large depth of field, and a digitizer 68 for converting an electrical analog signal generated by the detector 66 from the return light into a digital signal for subsequent decoding by a microprocessor or controller 48 into data indicative of the symbol being read. An on-board rechargeable battery 58 powers all the electrical components in the reader 40, and is recharged, as described below. An on-board wireless radio transceiver 70 sends and receives radio signals to a corresponding radio transceiver 96 (see FIG. 2) yin the workstation 10, as described below. A beeper 72 broadcasts auditory alarms, also as described below. The controller 48 controls operation of all the electrical components in the reader 40 and is electrically connected to electrical contacts 74, 76, 78 that extend externally of the housing 42.

With like numerals identifying like parts, FIG. 4 depicts an imager-based, auxiliary cordless reader 40 for imaging targets, such as indicia or symbols to be electro-optically read, as well as non-symbols, and includes a one- or two-dimensional, solid-state imager 30, preferably a CCD or a CMOS array, mounted in the handheld housing 42 on which the trigger 44 for initiating reading is mounted. The imager 30 has an array of image sensors operative, together with an imaging lens assembly 31, for capturing return light reflected and/or scattered from the target through the window 46 during the imaging to produce an electrical signal indicative of a captured image for subsequent decoding by the controller 48 into data indicative of the symbol being read, or into a picture of the target. The imager-based reader 40 also includes an on-board rechargeable battery 58 , an on-board wireless radio transceiver 70, and a beeper 72, as described above. The housing 42 has external electrical contacts 74, 76, 78, as described above.

When the imager-based reader 40 is operated in low light or dark ambient environments, an illuminator 32 is operative for illuminating the target during the imaging with illumination light directed from an illumination light source through the window 46. Thus, the return light may be derived from the illumination light and/or ambient light. The illumination light source comprises one or more light emitting diodes (LEDs). An aiming light generator 34 including an aiming laser may also be provided for projecting an aiming light pattern or mark on the target prior to imaging.

In operation of the imager-based reader 40, the controller 48 sends command signals to drive the aiming laser 34 to project the aiming pattern on the target prior to reading, and then to drive the illuminator LEDs 32 for a short time period, say 500 microseconds or less, and to energize the imager 30 during an exposure time period of a frame to collect light from the target during said time period. A typical array needs about 16-33 milliseconds to read the entire target image and operates at a frame rate of about 15-30 frames per second. The array may have on the order of one million addressable image sensors.

Returning to FIG. 1, the cradle 80 for receiving the auxiliary cordless reader 40 is mounted on the raised housing portion 18 of the workstation. The cradle 80 has cradle walls 82 bounding a compartment in which the auxiliary cordless reader 40 is removably received when not in the handheld mode. The cradle 80 is supported by the raised housing portion 18 above and remote from, and out of direct contact with, the countertop 14 to form a zero-footprint therewith. The cradle 80 has an open end 84 that opens onto the front wall 20 to facilitate ready insertion of the auxiliary cordless reader 40 into the cradle 80, as well as ready removal of the auxiliary cordless reader 40 from the cradle 80. The cradle 80 is integrally formed with the side wall 22, and is preferably injection-molded to be of one-piece construction therewith. The cradle 80 is inclined on the side wall 22 and has a weep hole on the cradle 80 for fluid drainage located at a lowest elevation relative to the countertop 14. At food retailers, there is always the possibility that food or liquids will spill on the cordless reader 40 or the cradle 80. The weep hole enables spilled liquids to easily drain.

The controller 48 of the auxiliary cordless reader 40 electrically communicates with the workstation 10 through the side wall 22 via the multiple external electrical contacts 74, 76, 78 that mate with corresponding multiple electrical contacts 88, 90, 92 in the cradle 80. Advantageously, there is access to all the contacts so they can be cleaned without the need for any disassembly of the cradle. The internal rechargeable battery 58 and the electrical recharging contact 74 connect to the mating electrical recharging contact 88 in the cradle 80 when the auxiliary cordless reader 40 is received in the compartment. The workstation 10 has a power supply 94 (see FIG. 2) inside the workstation 10 for recharging the battery 58 in the auxiliary cordless reader 40 via the recharging contacts 74, 88.

The sensor contact 76 connects to a mating sensor contact 90 in the cradle 80 when the auxiliary cordless reader 40 is received in the compartment. The controller 26 inside the workstation 10 detects the auxiliary cordless reader 40 in the cradle 80 via the sensor contacts 76, 90, for disabling the main reader 24, 24 when the auxiliary cordless reader 40 is not in the cradle 80, and for not enabling the main reader 24, 24 until the auxiliary cordless reader 40 is back in the cradle 80.

The data contact 78 connects to the mating data contact 92 in the cradle 80 when the auxiliary cordless reader 40 is received in the compartment. The controller 26 inside the workstation 10 is operative for downloading data corresponding to the indicia read by the auxiliary cordless reader 40 into a batch memory when the auxiliary cordless reader 40 is in the cradle 80, and for decoding the downloaded data. This batch data download can be used instead of transmitting the data between the wireless transceiver 70 in the auxiliary cordless reader 40 and the wireless transceiver 96 (see FIG. 2) in the workstation 10.

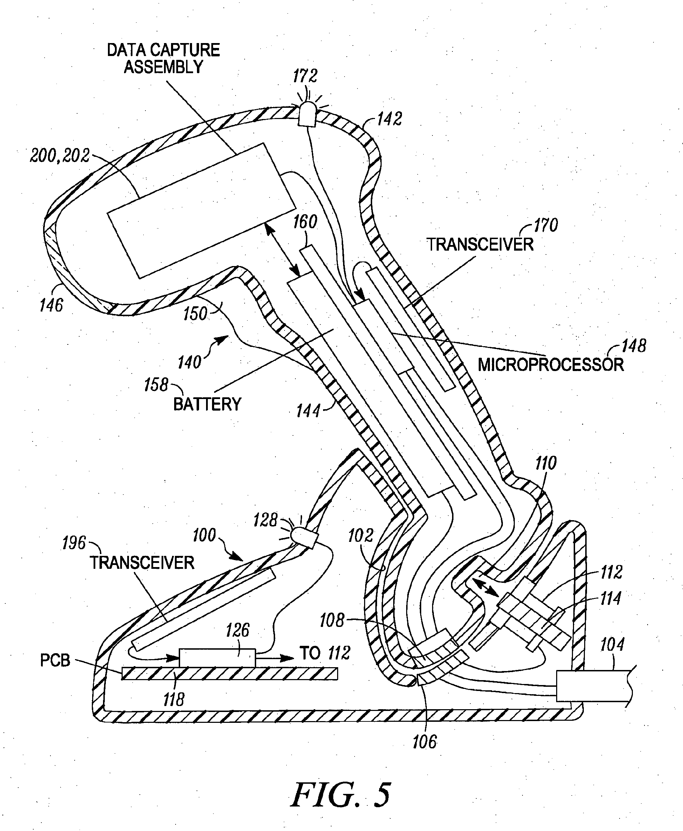

In accordance with one feature of this invention, an alarm, e.g., the beeper 28 in the workstation 10 and/or the beeper 72 in the cordless reader 40, is operative, under the control of at least one of the controllers 26, 48, for generating an advisory alert, e.g., a warning sound, either continuous or intermittent, to advise the clerk, for example, to return the cordless reader 40 to the compartment in the cradle 80 when the controller determines that the cordless reader 40 is in the handheld mode and at least one of the cordless reader 40 and the workstation 10 does not satisfy an operational condition, as described below. The alarm could also advantageously be a lamp, as described below in connection with FIG. 5, for generating the advisory alert as a warning light that glows continuously or flashes. In some cases, both a lamp and a beeper could be used simultaneously.

For example, the controller is operative to cause the advisory alert to be generated when the controller 26 in the workstation 10 determines that no data is received by the transceiver 96 in the workstation 10 after a time-out period, e.g., 30 seconds, has elapsed. This time-out period is adjustable. As another example, the controller is operative to cause the advisory alert to be generated when the controller 26 in the workstation 10 is disabled. Thus, if the cordless reader is removed while the workstation is disabled, or if the cordless reader is absent when the workstation is disabled, then the advisory alert is generated. As a further example, the controller is operative cause the advisory alert to be generated when the controller 26 in the workstation 10 determines that the data communication between the cordless reader 40 and the workstation 10 has been interrupted for a certain time period. The alarm encourages the clerk or operator to return the cordless reader to the base station when the cordless reader 40 is not in active use. This eliminates the inconvenience and expense, and minimizes the risk, of loss or misplacement of the cordless reader 40.

Turning now to FIG. 5, reference numeral 100 identifies a docking or base station analogous to workstation 10, except that no readers or windows are provided in the base station 100. Reference numeral 140 identifies a cordless reader analogous to reader 40. Just like the workstation 10 supports the cordless reader 40, the base station 100 supports the cordless reader 140 in a docked state when the cordless reader 140 is not in the handheld mode, for example, to conveniently park the cordless reader 140 when not in active use. Base station 100 includes a compartment 102 for receiving and holding the cordless reader 140.

As illustrated, a cable 104 includes power conductors for supplying electrical power to recharge a battery 158 in the reader 140, as well as data conductors for transmitting decoded data, control data, update data, etc. between the reader 140 and a remote host (not illustrated). Electrical contacts 106 on the base station 100 mate with electrical contacts 108 on the reader 140 to enable mutual electrical communication in the docked state. A wireless transceiver 196 in the base station 100 is analogous to the transceiver 96. A controller 126 in the base station 100 is analogous to the controller 26, and is mounted on a printed circuit board (PCB) 118.

The components enclosed by a dashed box in FIG. 3 comprise a laser-based data capture assembly 200, and the components enclosed by a dashed box in FIG. 4 comprise an imager-based data capture assembly 202. Either of these assemblies 200, 202 is mountable in a housing 142 of the cordless reader 140 of FIG. 5. The housing 142 has a handle 144 on which a trigger 150 for initiating reading is mounted, as well as a front window 146. A printed circuit board (PCB) 160 is mounted in the handle 144 on which a controller 148 (analogous to controller 48) and a rechargeable battery 158 (analogous to battery 58) are mounted. A wireless transceiver 170 in the reader 140 is analogous to the transceiver 70.

In accordance with the above-described alarm feature of this invention, an alarm, e.g., a lamp 128 (analogous to the beeper 28) in the base station 100 and/or a lamp 172 (analogous to the beeper 72) in the cordless reader 140, is operative, under the control of at least one of the controllers 126, 148, for generating an advisory alert, e.g., a warning light, either continuous or intermittent, to advise the clerk, for example, to return the cordless reader 140 to the compartment 102 in the base station 100 when the controller determines that the cordless reader 140 is in the handheld mode and at least one of the cordless reader 140 and the base station 100 does not satisfy an operational condition, as described above. The lamp 128, 172 could also be replaced by beepers.

Advantageously, the housing 142 is formed with a bore 110, and an energizable solenoid 112 in the base station 100 actuates a pin or armature 114 to move into the bore 110 to lock the housing 142 to the base station 100, and to move out of the bore 110 to release the 1hosing 42 from the base station 100. The controller 126 is electrically connected to the solenoid 112 via the electrical contacts 106, 108. The controller 126 generates an output control signal to energize the solenoid 112. This affirmative locking mechanism may be used to insure that the reader 140 is only removable when necessary and is affirmatively locked when not in active use.

It will be understood that each of the elements described above, or two or more together, also may find a useful application in other types of constructions differing from the types described above. For example, rather than using the imager-based readers 24, laser-based readers could be employed to replace one or all of the imager-based readers 24. Also, rather than mounting the cradle 80 at the side of a bi-optical workstation 10, the cradle could be mounted at the side of a vertical slot scanner that is placed on the countertop 14.

The transceivers 70, 96 and 170, 196 can communicate via any number of radio technologies, such as Bluetooth. When a symbol is scanned by the reader 40, the decoded information from the symbol is transmitted to the workstation 10, and is than sent to a remote host, e.g., a computer in a cash register, just as would have happened if the main reader 24, 24 itself had scanned the symbol. The host therefore receives symbol data from either the main reader 24, 24 or the auxiliary reader 40 without any need to provide an additional input port, which may not be available in some installations.

Alternatively, the reader 40 can transmit the symbol data directly to the host via a WiFi radio, since many retailers already have WiFi radio systems installed. In this case, the auxiliary reader 40 will have to include, in the transmitted data, identification of the cash register lane in which it is being used, so that the scanned product can be charged to the correct customer. Another possibility is to have the reader 40 transmit directly to a compatible radio transceiver in the host to which it is associated.

Readers generally produce an audible beep whenever a symbol has been successfully read. The warning sound produced by the beeper 72 is not the same sound as that audible beep. Thus, the beeper 72 is advantageously a large speaker on the workstation to produce a loud warning sound distinguishable from the successful decode beep. Similarly, if a lamp is used to emit a light upon a successful decode, then a different lamp, e.g., multiple or brighter LEDs, as well as different colors for the emitted light, could be used for the warning light.

While the invention has been illustrated and described as embodied in an alarm for encouraging the return of a cordless reader to a base station, e.g., a checkout terminal, it is not intended to be limited to the details shown, since various modifications and structural changes may be made without departing from the scope of the present invention which is defined in the appended claims.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention and, therefore, such adaptations should and are intended to be comprehended within the meaning and range of equivalence of the following claims.

## Claims

1. A checkout system (10, 100) for processing products bearing indicia, comprising:
a cordless reader (40, 140) operative for electro-optically reading the indicia in a handheld mode;
a base station (80, 100) having a compartment in which the cordless reader is removably mounted in a hands-free mode;
a transceiver (70, 170, 196) supported by each of the cordless reader and the base station and operative for wirelessly communicating data between the cordless reader and the base station when the cordless reader is in the handheld mode;
a first controller (48) supported by the cordless reader operative for controlling operation of the cordless reader;
a second controller (126) supported by the base station, wherein at least one of the first (48) and the second controller (126) is operative for determining the mode of the cordless reader; **characterized by**
an alarm (28, 128) supported by at least one of the cordless reader and the base station and operative for generating an advisory alert to advise a return of the cordless reader to the compartment when the at least one of the first (48) and the second (26) controllers determines that the cordless reader is in the handheld mode and at least one of the cordless reader and the base station satisfies an operational condition, wherein the operational condition includes at least one of (1) determination by the second controller (126), which is supported by the base station, that no symbol data that is obtained from the cordless reader scanning a symbol is received wirelessly by the transceiver in the base station after a time-out period has elapsed or (2) disabling of the second controller (126), which is supported by the base station.

2. The system (10, 100) of claim 1, wherein the base station (80, 100) is configured as a bi-optical workstation having a raised housing extending upwardly away from a support surface, an upright window supported by the raised housing, a generally horizontal window extending transversely of the upright window, a main reader supported by the workstation for electro-optically reading the indicia through at least one of the windows, and a cradle bounding the compartment in which the cordless reader (40, 140) is removably mounted.

3. The system (10, 100) of claim 1, wherein the base station (80, 100) is configured as a docking station mounted on a support surface and bounding the compartment in which the cordless reader (40, 140) is removably mounted.

4. The system (10, 100) of claim 1, wherein the cordless reader (40, 140) is one of a laser-based reader for emitting a laser beam to the indicia, and a solid-state imager-based reader for capturing return light from the indicia.

5. The system (10, 100) of claim 1, wherein the cordless reader (40, 140) includes a sensor contact for connection to a mating sensor contact in the base station (80, 100) when the cordless reader (40, 140) is received in the compartment; and wherein the second controller (26) which is supported by the base station is operative for detecting the cordless reader (40, 140) in the base station via the sensor contacts.

6. The system (10, 100) of claim 1, wherein the alarm (28, 128) is one of a lamp for generating the advisory alert as a light and a beeper for generating the advisory alert as a sound.

7. The system (10, 100) of claim 1, wherein the alarm (28, 128) is mounted on the base station (80, 100).

8. A checkout method of processing products bearing indicia, comprising the steps of:
electro-optically reading the indicia with a cordless reader in a handheld mode;
removably mounting the cordless reader in a compartment of a base station in a hands-free mode;
wirelessly communicating data between the cordless reader and the base station with a transceiver supported by each of the cordless reader and the base station when the cordless reader is in the handheld mode;
controlling operation of the cordless reader with a first controller supported by the cordless reader;
controlling operation of the base station with a second controller supported by the base station;
determining the mode of the cordless reader, with at least one of the first and the second controller; **characterized by**
generating an advisory alert with an alarm supported by at least one of the cordless reader and the base station to advise a return of the cordless reader to the compartment when the at least one of the first and the second controller determines that the cordless reader is in the handheld mode and at least one of the cordless reader and the base station satisfies an operational condition, wherein the operational condition includes at least one of (1) determination by the second controller, which is supported by the base station, that no symbol data that is obtained from the cordless reader scanning a symbol is received wirelessly by the transceiver in the base station after a time-out period has elapsed or (2) disabling of the second controller which is supported by the base station.

9. The method of claim 8, and configuring the base station as a bi-optical workstation having a raised housing extending upwardly away from a support surface, an upright window supported by the raised housing, a generally horizontal window extending transversely of the upright window, a main reader supported by the workstation for electro-optically reading the indicia through at least one of the windows, and a cradle bounding the compartment in which the cordless reader is removably mounted.

10. The method of claim 8, and configuring the base station as a docking station mounted on a support surface and bounding the compartment in which the cordless reader is removably mounted.

11. The method of claim 8, and configuring the cordless reader as one of a laser-based reader for emitting a laser beam to the indicia, and a solid-state imager-based reader for capturing return light from the indicia.

12. The method of claim 8, and providing the cordless reader with a sensor contact for connection to a mating sensor contact in the base station when the cordless reader is received in the compartment; and detecting the cordless reader in the base station via the sensor contacts.

13. The method of claim 8, and configuring the alarm as one of a lamp for generating the advisory alert as a light and a beeper for generating the advisory alert as a sound.

14. The method of claim 8, and mounting the alarm on the base station.

## Patentansprüche

1. Kassensystem (10, 100) zum Abfertigen von mit Zeichen versehenen Produkten mit:
einem schnurlosen Lesegerät (40, 140) zum elektrooptischen Lesen der Zeichen in einem Handmodus,
einer Basisstation (80, 100) mit einem Fach, in dem das schnurlose Lesegerät in einem Freihandmodus herausnehmbar befestigt ist,
einem Transceiver (70, 170, 196), der in dem schnurlosen Lesegerät und in der Basisstation gelagert ist und zum drahtlosen Übertragen von Daten zwischen dem schnurlosen Lesegerät und der Basisstation dient, wenn sich das schnurlose Lesegerät im Handmodus befindet,
einer in dem schnurlosen Lesegerät gelagerten ersten Steuerung (48) zum Steuern des Betriebs des schnurlosen Lesegeräts,
einer in der Basisstation gelagerten zweiten Steuerung (126), wobei die erste (48) und / oder die zweite Steuerung (126) zum Bestimmen des Modus des schnurlosen Lesegeräts dient, **gekennzeichnet durch**
eine Alarmvorrichtung (28, 128), die in dem schnurlosen Lesegerät und / oder der Basisstation gelagert ist und zum Erzeugen einer Warnmeldung dient, die ein Rückführen des schnurlosen Lesegeräts in das Fach empfiehlt, wenn die erste (48) und / oder die zweite (26) Steuerung bestimmt, dass sich das schnurlose Lesegerät im Handmodus befindet, und das schnurlose Lesegerät und / oder die Basisstation eine Betriebsbedingung erfüllt, wobei zu der Betriebsbedingung (1) das Bestimmen **durch** die in der Basisstation gelagerte zweite Steuerung (126) gehört, dass nach Ablauf eines Zeitlimits keine von dem ein Symbol auslesenden schnurlosen Lesegerät gewonnenen Symboldaten auf drahtlosem Wege von dem Transceiver in der Basisstation empfangen werden, und / oder (2) das Deaktivieren der zweiten Steuerung (126) gehört, die in der Basisstation gelagert ist.

2. System (10, 100) nach Anspruch 1, bei dem die Basisstation (80, 100) als bioptische Workstation mit einem erhabenen Gehäuse, das sich von einer Lagerungsfläche aus nach oben erstreckt, einem in dem erhabenen Gehäuse gelagerten, vertikalen Fenster, einem quer zu dem vertikalen Fenster verlaufenden, allgemein horizontalen Fenster, einem in der Workstation gelagerten Hauptlesegerät zum elektrooptischen Lesen der Zeichen durch mindestens eines der Fenster und einer das Fach umgrenzenden Aufnahmevorrichtung konfiguriert ist, in der das schnurlose Lesegerät (40, 140) herausnehmbar befestigt ist.

3. System (10, 100) nach Anspruch 1, bei dem die Basisstation (80, 100) als Andockstation konfiguriert ist, die auf einer Lagerungsfläche befestigt ist und das Fach umgrenzt, in dem das schnurlose Lesegerät (40, 140) herausnehmbar befestigt ist.

4. System (10, 100) nach Anspruch 1, bei dem es sich bei dem schnurlosen Lesegerät (40, 140) um ein Lesegerät auf Laserbasis zum Aussenden eines Laserstrahls zu den Zeichen oder ein Lesegerät auf Festkörperbildsensorbasis zum Erfassen von von den Zeichen zurückgesendetem Licht handelt.

5. System (10, 100) nach Anspruch 1, bei dem das schnurlose Lesegerät (40, 140) einen Sensorkontakt aufweist, über den es mit einem passenden Sensorkontakt in der Basisstation (80, 100) verbunden ist, wenn es in dem Fach aufgenommen ist, und die in der Basisstation gelagerte zweite Steuerung (26) zum Erfassen des schnurlosen Lesegeräts (40, 140) in der Basisstation über die Sensorkontakte dient.

6. System (10, 100) nach Anspruch 1, bei dem es sich bei der Alarmvorrichtung (28, 128) um eine Lampe zum Erzeugen der Warnmeldung als Licht oder einen Signaltongeber zum Erzeugen der Warnmeldung als Ton handelt.

7. System (10, 100) nach Anspruch 1, bei dem die Alarmvorrichtung (28, 128) an der Basisstation (80, 100) befestigt ist.

8. Kassierverfahren zum Abfertigen von mit Zeichen versehenen Produkten, das folgende Schritte umfasst:
elektrooptisches Lesen der Zeichen mit einem schnurlosen Lesegerät in einem Handmodus,
herausnehmbares Befestigen des schnurlosen Lesegeräts in einem Fach einer Basisstation in einem Freihandmodus,
drahtloses Übertragen von Daten zwischen dem schnurlosen Lesegerät und der Basisstation mit einem Transceiver, der in dem schnurlosen Lesegerät und in der Basisstation gelagert ist, wenn sich das schnurlose Lesegerät im Handmodus befindet,
Steuern des Betriebs des schnurlosen Lesegeräts mit einer in dem schnurlosen Lesegerät gelagerten ersten Steuerung,
Steuern des Betriebs der Basisstation mit einer in der Basisstation gelagerten zweiten Steuerung,
Bestimmen des Modus des schnurlosen Lesegeräts mit der ersten und / oder der zweiten Steuerung, **gekennzeichnet durch**
Erzeugen einer Warnmeldung mit einer Alarmvorrichtung, die in dem schnurlosen Lesegerät und / oder der Basisstation gelagert ist, zum Empfehlen eines Rückführens des schnurlosen Lesegeräts in das Fach, wenn die erste und / oder die zweite Steuerung bestimmt, dass sich das schnurlose Lesegerät im Handmodus befindet, und das schnurlose Lesegerät und / oder die Basisstation eine Betriebsbedingung erfüllt, wobei zu der Betriebsbedingung (1) das Bestimmen **durch** die in der Basisstation gelagerte zweite Steuerung gehört, dass nach Ablauf eines Zeitlimits keine von dem ein Symbol auslesenden schnurlosen Lesegerät gewonnenen Symboldaten auf drahtlosem Wege von dem Transceiver in der Basisstation empfangen werden, und / oder (2) das Deaktivieren der zweiten Steuerung gehört, die in der Basisstation gelagert ist.

9. Verfahren nach Anspruch 8 und Konfigurieren der Basisstation als bioptische Workstation mit einem erhabenen Gehäuse, das sich von einer Lagerungsfläche aus nach oben erstreckt, einem in dem erhabenen Gehäuse gelagerten, vertikalen Fenster, einem quer zu dem vertikalen Fenster verlaufenden, allgemein horizontalen Fenster, einem in der Workstation gelagerten Hauptlesegerät zum elektrooptischen Lesen der Zeichen durch mindestens eines der Fenster und einer das Fach umgrenzenden Aufnahmevorrichtung konfiguriert ist, in der das schnurlose Lesegerät herausnehmbar befestigt ist.

10. Verfahren nach Anspruch 8 und Konfigurieren der Basisstation als Andockstation, die auf einer Lagerungsfläche befestigt ist und das Fach umgrenzt, in dem das schnurlose Lesegerät herausnehmbar befestigt ist.

11. Verfahren nach Anspruch 8 und Konfigurieren des schnurlosen Lesegeräts als Lesegerät auf Laserbasis zum Aussenden eines Laserstrahls zu den Zeichen oder als Lesegerät auf Festkörperbildsensorbasis zum Erfassen von von den Zeichen zurückgesendetem Licht.

12. Verfahren nach Anspruch 8 und Versehen des schnurlosen Lesegeräts mit einem Sensorkontakt, über den es mit einem passenden Sensorkontakt in der Basisstation verbunden ist, wenn es in dem Fach aufgenommen ist, und zum Erfassen des schnurlosen Lesegeräts in der Basisstation über die Sensorkontakte.

13. Verfahren nach Anspruch 8 und Konfigurieren der Alarmvorrichtung als Lampe zum Erzeugen der Warnmeldung als Licht oder als Signaltongeber zum Erzeugen der Warnmeldung als Ton.

14. Verfahren nach Anspruch 8 und Befestigen der Alarmvorrichtung an der Basisstation.

## Revendications

1. Système de caisse (10, 100) pour traiter des produits portant des indices, comprenant :
un lecteur sans cordon (40, 140) opérationnel pour lire électro-optiquement les indices dans un mode portatif ;
une station de base (80, 100) ayant un compartiment dans lequel le lecteur sans cordon est monté de façon amovible dans un mode mains-libres ;
un émetteur-récepteur (70, 170, 196) supporté par chacun du lecteur sans cordon et de la station de base et opérationnel pour communiquer de manière sans fil des données entre le lecteur sans cordon et la station de base lorsque le lecteur sans cordon est dans le mode portatif ;
un premier contrôleur (48) supporté par le lecteur sans cordon opérationnel pour contrôler le fonctionnement du lecteur sans cordon ;
un second contrôleur (126) supporté par la station de base, où au moins un du premier (48) et du second contrôleur (126) est opérationnel pour déterminer le mode du lecteur sans cordon ; **caractérisé par**
une alarme (28, 128) supportée par au moins un du lecteur sans cordon et de la station de base et opérationnelle pour générer une alerte de conseil pour conseiller un retour du lecteur sans cordon dans le compartiment lorsque le au moins un du premier (48) et du second contrôleur (26) détermine que le lecteur sans cordon est dans le mode portatif et au moins un du lecteur sans cordon et de la station de base satisfait à une condition opérationnelle, où la condition opérationnelle inclut au moins un de (1) la détermination par le second contrôleur (126), qui est supporté par la station de base, qu'aucune donnée de symbole qui est obtenue à partir du lecteur sans cordon scannant un symbole n'est reçue de manière sans fil par l'émetteur-récepteur dans la station de base après qu'une période de temporisation s'est écoulée ou (2) la désactivation du second contrôleur (126), qui est supporté par la station de base.

2. Système (10, 100) selon la revendication 1, dans lequel la station de base (80, 100) est configurée comme une station de travail bi-optique ayant un logement élevé s'étendant vers le haut loin d'une surface de support, une fenêtre droite supportée par le logement élevé, une fenêtre généralement horizontale s'étendant transversalement par rapport à la fenêtre droite, un lecteur principal supporté par la station de travail pour lire électro-optiquement les indices à travers au moins une des fenêtres, et un berceau délimitant le compartiment dans lequel le lecteur sans cordon (40, 140) est monté de façon amovible.

3. Système (10, 100) selon la revendication 1, dans lequel la station de base (80, 100) est configurée comme une station d'accueil montée sur une surface de support et délimitant le compartiment dans lequel le lecteur sans cordon (40, 140) est monté de façon amovible.

4. Système (10, 100) selon la revendication 1, dans lequel le lecteur sans cordon (40, 140) est un d'un lecteur à laser pour émettre un faisceau laser vers les indices, et d'un lecteur à imageur à semi-conducteurs pour capturer la lumière retour en provenance des indices.

5. Système (10, 100) selon la revendication 1, dans lequel le lecteur sans cordon (40, 140) inclut un contact de capteur pour la connexion à un contact de capteur d'appariement dans la station de base (80, 100) lorsque le lecteur sans cordon (40, 140) est reçu dans le compartiment ; et dans lequel le second contrôleur (26) qui est supporté par la station de base est opérationnel pour détecter le lecteur sans cordon (40, 140) dans la station de base via les contacts de capteur.

6. Système (10, 100) selon la revendication 1, dans lequel l'alarme (28, 128) est une d'une lampe pour générer l'alerte de conseil comme une lumière et d'un bipeur pour générer l'alerte de conseil comme un son.

7. Système (10, 100) selon la revendication 1, dans lequel l'alarme (28, 128) est montée sur la station de base (80, 100).

8. Procédé de caisse visant à traiter des produits portant des indices, comprenant les étapes consistant à :
lire électro-optiquement les indices avec un lecteur sans cordon dans un mode portatif ;
monter de façon amovible le lecteur sans cordon dans un compartiment d'une station de base dans un mode mains-libres ;
communiquer de manière sans fil des données entre le lecteur sans cordon et la station de base avec un émetteur-récepteur supporté par chacun du lecteur sans cordon et de la station de base lorsque le lecteur sans cordon est dans le mode portatif ;
contrôler le fonctionnement du lecteur sans cordon avec un premier contrôleur supporté par le lecteur sans cordon ;
contrôler le fonctionnement de la station de base avec un second contrôleur supporté par la station de base ;
déterminer le mode du lecteur sans cordon, avec au moins un du premier et du second contrôleur ; **caractérisé par**
la génération d'une alerte de conseil avec une alarme supportée par au moins un du lecteur sans cordon et de la station de base pour conseiller un retour du lecteur sans cordon dans le compartiment lorsque le au moins un du premier et du second contrôleur détermine que le lecteur sans cordon est dans le mode portatif et au moins un du lecteur sans cordon et de la station de base satisfait à une condition opérationnelle, où la condition opérationnelle inclut au moins un de (1) la détermination par le second contrôleur, qui est supporté par la station de base, qu'aucune donnée de symbole qui est obtenue à partir du lecteur sans cordon scannant un symbole n'est reçue de manière sans fil par l'émetteur-récepteur dans la station de base après qu'une période de temporisation s'est écoulée ou (2) la désactivation du second contrôleur qui est supporté par la station de base.

9. Procédé selon la revendication 8, et configurant la station de base comme une station de travail bi-optique ayant un logement élevé s'étendant vers le haut loin d'une surface de support, une fenêtre droite supportée par le logement élevé, une fenêtre généralement horizontale s'étendant transversalement par rapport à la fenêtre droite, un lecteur principal supporté par la station de travail pour lire électro-optiquement les indices à travers au moins une des fenêtres, et un berceau délimitant le compartiment dans lequel le lecteur sans cordon est monté de façon amovible.

10. Procédé selon la revendication 8, et configurant la station de base comme une station d'accueil montée sur une surface de support et délimitant le compartiment dans lequel le lecteur sans cordon est monté de façon amovible.

11. Procédé selon la revendication 8, et configurant le lecteur sans cordon comme un d'un lecteur à laser pour émettre un faisceau laser vers les indices, et d'un lecteur à imageur à semi-conducteurs pour capturer la lumière retour en provenance des indices.

12. Procédé selon la revendication 8, et munissant le lecteur sans cordon d'un contact de capteur pour la connexion à un contact de capteur d'appariement dans la station de base lorsque le lecteur sans cordon est reçu dans le compartiment ; et détectant le lecteur sans cordon dans la station de base via les contacts de capteur.

13. Procédé selon la revendication 8, et configurant l'alarme comme une d'une lampe pour générer l'alerte de conseil comme une lumière et d'un bipeur pour générer l'alerte de conseil comme un son.

14. Procédé selon la revendication 8, et montant l'alarme sur la station de base.
